(19) **Europäisches Patentamt**
**European Patent Office**
**Office européen des brevets**

(11) **EP 4 704 327 A1**

# (12) EUROPEAN PATENT APPLICATION

(43) Date of publication:
**04.03.2026 Bulletin 2026/10**

(21) Application number: **25195506.8**

(22) Date of filing: **12.08.2025**

(51) International Patent Classification (IPC):
**H02P 7/02** (2016.01)       **H02P 25/034** (2016.01)
**F16K 37/00** (2006.01)       **H01F 7/06** (2006.01)

(52) Cooperative Patent Classification (CPC):
**H02P 7/02; F16K 37/0041; H01F 7/06;
H02P 25/034; H01F 2007/1888**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.09.2024 US 202418823602**

(71) Applicant: **Analog Devices International
Unlimited Company
Co. Limerick (IE)**

(72) Inventors:
• **Franchini, Luigi**
  **Limerick (IE)**
• **Wrieden, Sven**
  **Limerick (IE)**
• **Corbeanu, Dan-Andrei**
  **Limerick (IE)**

(74) Representative: **Horler, Philip John
Withers & Rogers LLP
2 London Bridge
London SE1 9RA (GB)**

## (54) SENSORLESS ADAPTIVE VALVE CONTROL SYSTEM

(57)    A valve control system and method can include: a control logic configured to couple to a conductor and to a movable mechanism such that a back electromotive force (BEMF) peak is created within the conductor based on the movable mechanism being moved, the control logic further configured to: apply a control voltage to the conductor; detect the BEMF peak; determine a peak timing for the BEMF peak, and adjust a control voltage timing for the control voltage based on the peak timing.

**EP 4 704 327 A1**

**Description**

This application claims priority from US patent application number 18/823,602 filed on 3 September 2024.

TECHNICAL FIELD

This disclosure relates to valve control, more particularly to sensorless adaptive control of valve control signals based on detection of the actual valve movements.

BACKGROUND

Massive trends toward automation are underway in many industries, including manufacturing, health care, and automotive. This automation relies heavily on On-Off valves implementing electric solenoids. These electric solenoids provide a binary, unidirectional movement, with limited reach.

Electric solenoids can be implemented as PWM controlled ON-OFF valves, which are largely used for flow control in both pneumatic and hydraulic systems. The electric solenoid ON-OFF valves offer significant cost saving compared with more expensive solutions based on servomotor controlled valves.

In addition, PWM controlled ON-OFF valves mitigate the typical hysteresis issues which affect the servomotor valves. Electric solenoids can be implemented in sprayers for precise agriculture systems, pneumatic control actuators, and fluid control actuators.

Illustratively, electronic solenoids play an important role in the medical field where precise and accurate motion is required, such as during the operation of dialysis and dosing machines. Industrial manufacturing can require the precise actuation of tens or hundreds of electric solenoids, for example in textile manufacturing systems.

When used in industrial manufacturing, the malfunctioning of one electric solenoid can impact the quality of a product, can stop a production line, and can even present a risk to an operator. When used in the medical or security industries, the malfunctioning of an electric solenoid can result in loss of life.

Furthermore, as an extension of the electronics industry, electronic solenoids have come under ever-increasing commercial competitive pressures demanding miniaturized, feature rich, low cost, and low power solenoids. Current technical problems constraining electric solenoids include errors in the opening times and closing times of the electric solenoid when compared to the control signal.

That is, the effective physical ON/OFF duty cycle can significantly differ from the commanded PWM duty cycle causing mismatch between the opening and closing times of the valve. Such an error affects the control of the flow especially when the application control requirements demand fast valves operating at high PWM frequencies so that open and close timings become comparable with the PWM period.

The control of electric solenoids is generally implemented in feedforward mode. The valve is switched on (valve is open) and off (valve is closed) at a given duty cycle.

The target air or liquid flow is linked to the applied duty cycle. Because of the feedforward flow control, the accurate control of the ON/OFF duty cycle is critical to controlling the precise actuation of the solenoid.

Ensuring precise repeatable duty cycle is at the core of insertion strategies outlined in road maps for development of next generation products. One previous attempt utilizes an error compensation value generated during a system calibration routine. However, these system calibration routines are generally done once when the valve is first produced, sometimes a second time when the valve is installed.

Even so, opening and closing times can vary significantly depending on pressure, temperature, maintenance of the valve, contamination, and viscosity of the fluid, so an initial calibration after manufacturing can be inappropriate when the electric solenoid is installed in the field under different conditions.

Error between the commanded PWM duty cycle and the opening and closing times of the valve can also drift over time due to aging of the valve. This can render the original calibration ineffective.

Other previous attempts use external sensors mounted to the solenoid for detecting attributes of the solenoid. These external sensors increase the control hardware footprint, increase costs for each solenoid monitored, increase power consumption, and many times require application specific engineering to ensure proper integration of the solenoid and sensors.

Furthermore, in many sterile or harsh environments, externally coupled sensors present a technical problem and cannot be used, as the external sensors would be exposed to the environment. Yet even further, external sensors and circuitry generally have large signal to noise ratios, and in some cases, detection might require enough power to affect the motion of the solenoid during measurement, which can create motion artifacts in an otherwise smooth solenoid motion.

These previous attempts to precisely control the effective ON/OFF duty cycle of a valve have failed to provide a full solution for lower power, low cost, and integrated internal error correction that the industry demands. In view of the ever-increasing commercial competitive pressures, along with growing consumer expectations and the diminishing opportunities for meaningful product differentiation in the marketplace, it is critical that answers be found for these problems.

Thus, a need remains for electronic solenoids with internal error detection and correction of effective duty cycle. As a sub-component within full solenoid system, a control system implemented on a control logic is used to control the solenoids and the valves coupled thereto.

The control logic lies at the heart of the design when it comes to creating a solenoid system and there are many different types to choose from. Control logic is sold as individual components that can be configured for mass application or bespoke installation of almost any different type of application specific hardware.

Control logic is therefore configurable to interface with many different components. Some examples include a control logic configured to: apply a voltage with a drive switch; or detect a current through a sensor.

For example, input/output pins on the control logic can be assigned to interface with a drive switch or sensor, passive components can be assigned to input/output pins, sensors internal to the control logic can be assigned to inputs, clock and sampling times can be set, voltages and currents can be set, and other configurable elements of the control logic determined. This can be defined in firmware.

Solutions to these problems have been long sought but prior developments have not taught or suggested any complete solution and, thus, solutions to these problems have long eluded those skilled in the art.

BRIEF DESCRIPTION OF THE DRAWINGS

A sensorless adaptive valve control system for PWM electric solenoid based On-OFF valves is illustrated in the figures of the accompanying drawings. The figures depicting the valve control system are meant to be exemplary and not limiting, in which like reference numerals are intended to refer to like components, and in which:

FIG. 1 is a block diagram of the valve control system.
FIG. 2 is a first timing diagram for the valve control system of FIG. 1, in a first embodiment.
FIGs. 3A and 3B are flow charts for the valve control system of FIG. 1 and the timing diagram of FIG. 2.
FIG. 4 is a second timing diagram for the valve control system of FIG. 1, in a second embodiment.
FIGs. 5A and 5B are flow charts for the valve control system of FIG. 1 and the timing diagram of FIG. 4.

DETAILED DESCRIPTION

In the following description, reference is made to the accompanying drawings that form a part hereof, and in which are shown by way of illustration, embodiments in which the valve control system may be practiced. It is to be understood that other embodiments may be utilized and structural changes may be made without departing from the scope of the valve control system.

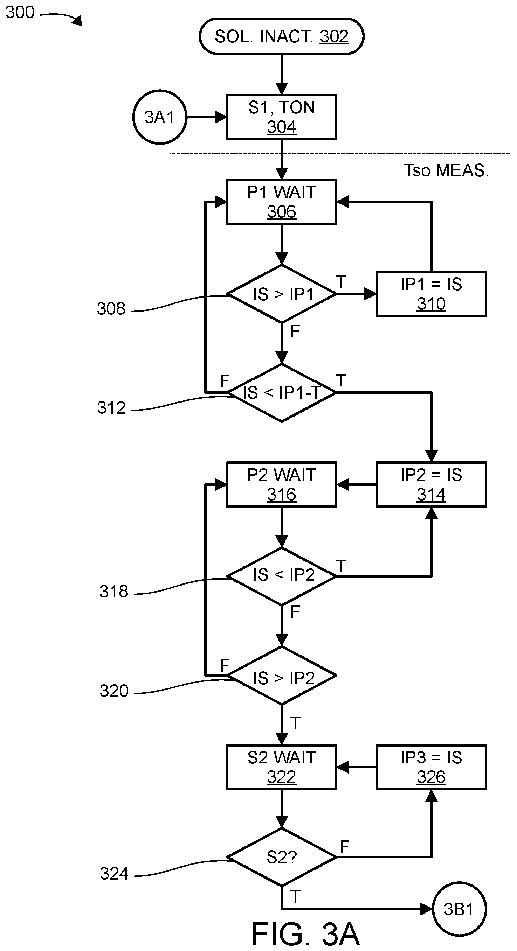

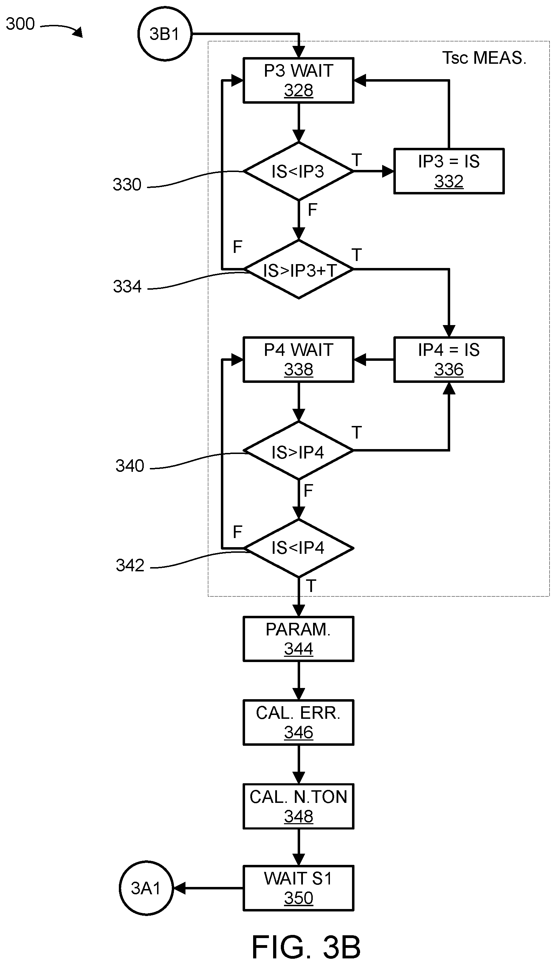

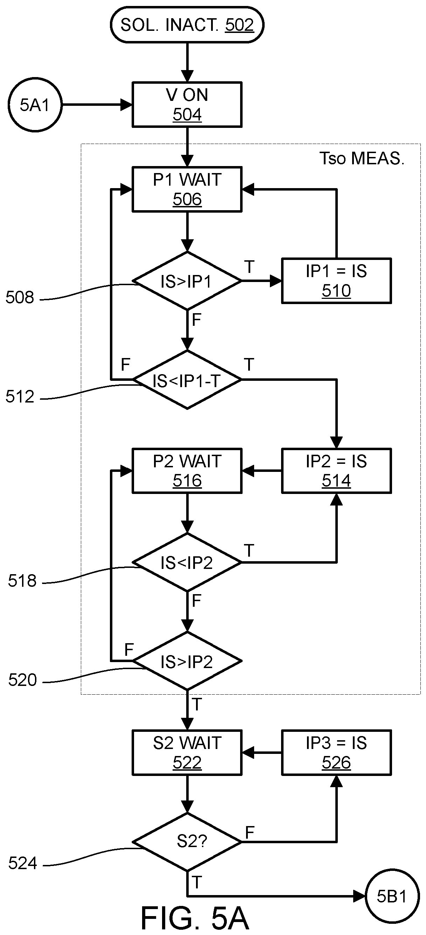

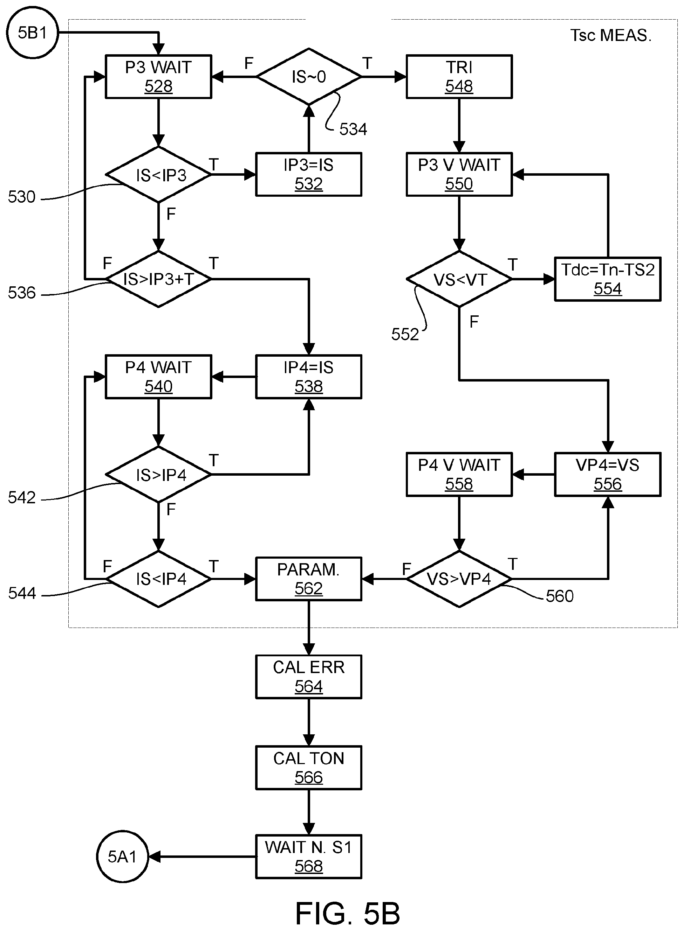

When features, aspects, or embodiments of the valve control system are described in terms of steps of a process, an operation, a control flow, or a flow chart, it is to be understood that the steps can be combined, performed in a different order, deleted, or include additional steps without departing from the valve control system as described herein. It is to be understood that although control flows for the system are disclosed in detail, for example in FIGs. 3A, 3B, 5A, and 5B the valve control system 100 is not limited thereto and other methods and steps could be used to practice the valve control system 100.

The valve control system is described in sufficient detail to enable those skilled in the art to make and use the valve control system and provide numerous specific details to give a thorough understanding of the valve control system; however, it will be apparent that the valve control system may be practiced without these specific details.

In order to avoid obscuring the valve control system, some well-known system configurations and descriptions are not disclosed in detail. Likewise, the drawings showing embodiments of the system are semi-diagrammatic and not to scale and, particularly, some of the dimensions are for the clarity of presentation and are shown greatly exaggerated in the drawing FIGs. Generally, the valve control system can be operated in any orientation.

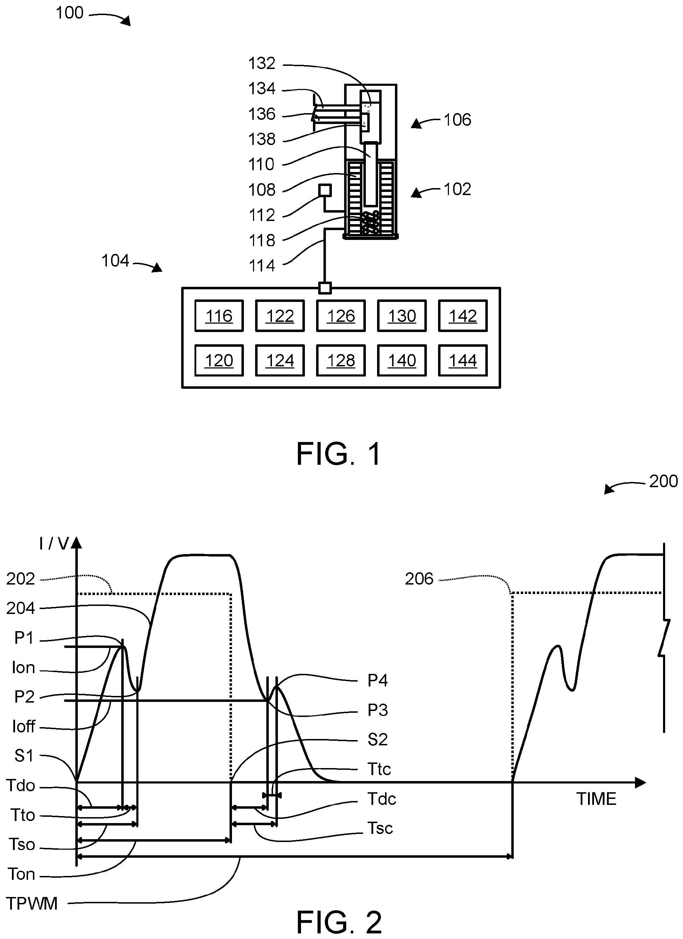

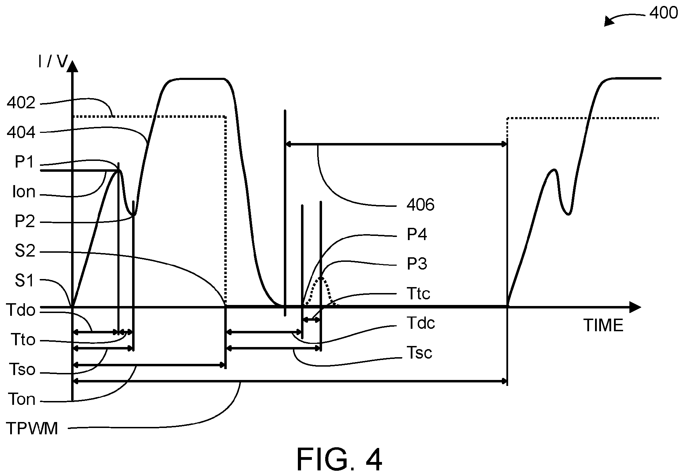

As used herein, the term system is defined as a device or method depending on the context in which it is used. As used herein, when attributes of the timing diagrams of FIG. 2 and FIG. 4 are shown and described -including peak P1, peak P2, peak P3, peak P4, control voltage cycle S1, and control voltage cycle S2- the letter "I" can precede the referenced attribute to indicate the current at that reference attribute, or the letter "T" can precede the referenced attribute to indicate the time at that reference attribute. As used herein, the term communicatively coupled means an electromotive force or back electromotive force between communicatively coupled elements. Coupled can also mean a touching between elements.

Referring now to FIG. 1, therein is shown a block diagram of the valve control system 100. The valve control system 100 is depicted as being implemented with a solenoid 102 electrically coupled to an integrated solenoid driver 104 and mechanically coupled to a valve 106.

It is contemplated that the solenoid 102 could be implemented in many configurations with components of the solenoid 102 in different layouts, shapes, or positions. The solenoid 102 will be understood as an electromechanical component inducing back and forth motion with an electric field induced by a wire.

Here, the solenoid 102 is depicted comprising a coil 108 with a movable mechanism that moves or otherwise imparts mechanical force in response to a magnetic field generated by a control voltage 202 of FIG. 2 applied to the coil 108. The coil 108 can be a conductor wrapped around a plunger 110. The movable mechanism is communicatively coupled to the coil such that a BEMF peak is created within the coil based on the movable mechanism being moved.

It is contemplated that the movable mechanism could be any type of mechanism communicatively coupled to produce the BEMF peak including a rotary movable mechanism, for example found in rotating motors; or a linear movable mechanism, for example found in solenoids.

One skilled in the art will appreciate that other words may be used to describe the movable mechanism including but not limited to a piston, an actuator, a movable core, a movable slug, and a plunger. For descriptive clarity, hereinafter the movable mechanism will be referred to as the plunger 110.

When the coil 108 is actuated by applying the control voltage 202 to the coil 108 of the solenoid 102, the plunger 110 is either extended out of the coil 108 or retracted into the coil 108 depending on current direction and system assembly. The position the plunger 110 takes when current is passed through the coil 108 is actuated is the actuated position.

The solenoid 102 is shown having a first connection 112 and a second connection 114. The first connection 112 can be coupled to VM, which can be an actuator supply voltage, while the second connection 114 can be coupled to drive switches 116 such as a half bridge, or Low Side switches with high side freewheeling diodes; the drive switches 116 contained within the integrated solenoid driver 104.

Although the first connection 112 of the solenoid 102 is described as connected to supply voltage, it is contemplated that the first connection 112 could alternatively be connected to ground when other configurations for the drive switches 116 are used. Still further, it is contemplated that the first connection 112 could alternatively be connected to a second half bridge (not shown) to form a full H-bridge for the coil 108.

The solenoid 102 can further include a spring 118 for providing mechanical resistance against the motion of the plunger 110 and to limit the retraction or extension of the plunger 110 within the solenoid 102 during actuation. Both extension and retraction types of solenoids are contemplated and can be adapted for use with the valve control system 100.

These types of solenoids differ in the location of the spring 118 and design of the plunger 110. Rotary solenoids are yet a further contemplated implementation, again differing in the location and design of the spring 118 and also in the type of movement produced.

The integrated solenoid driver 104 can include a switch controller 120 coupled to the solenoid 102 through a half bridge, for example. The switch controller 120 is to be understood herein as a physical structural component at least having structural low power inputs and higher power outputs.

Isolation for protecting delicate control circuitry is also a common structural component of switch controllers 120. The switch controller 120 is typically referred to as a gate driver.

Illustratively for example, the switch controller 120 can be a high-side low-side PWM driver. The switch controller 120 can control the drive switches 116 with a pulse-width-modulated (PWM) signal in order to provide voltages to the solenoid 102.

The switch controller 120 can be implemented as dedicated ICs, discrete transistors, or transformers. The switch controller 120 can also be integrated within a larger IC or IC package.

The drive switches 116 are contemplated to be comprised of N-Channel Depletion MOSFETs, insulated-gate bipolar transistors (IGBTs), or a combination of N-Channel Depletion MOSFETs P-Channel Depletion MOSFETs, for example. The switch controller 120 can provide the PWM signal to the drive switches 116. The PWM signal can provide an ON voltage, and an OFF voltage.

The integrated solenoid driver 104 can further include a current sensor 122 coupled to the solenoid 102. The current sensor 122 can detect a current 204 of FIG. 2 through the coil 108 of the solenoid 102. More particularly, the current sensor 122 is configured to detect the BEMF peaks P1, P2, P3, or P4 of FIG. 2 and of FIG. 4.

The current sensor 122 is to be understood herein as a physical structural component at least having structural input and output connections. However, many forms of the current sensor 122 are contemplated including Hall effect linear sensors, galvanically isolated sensors, or GMR-based sensors. Yet other forms are contemplated including fluxgate sensors, shunt resistors, and even fiber optic interferometer based sensors.

The analog current detected by the current sensor 122 can be digitized by a current analog to digital converter (IADC 124). The digitized current, such as current 204, is provided to control logic 126 for processing. The control logic 126 is configured to determine a first timing for one of the BEMF peaks P1, P2, P3, and P4, and configured to adjust a second timing for the control voltage 202 during the subsequent cycle 206 of FIG. 2 based on the first timing.

The control logic 126 is to be understood herein as a physical structural component at least having transistor logic gates for providing computation and control. Furthermore, the control logic 126 includes structural inputs and outputs typically operating between zero and five volts. It is contemplated that the control logic 126 can be a TTL or CMOS based architecture but could also include other logic families including RTL, DTL, and ECL, for example.

The control logic 126 can be of high or low complexity. For example in some more complex control logics 126, the current sensor 122 and the IADC 124 can be internal to the control logic 126 and others of lower complexity could have I/O pins assigned to interface with these external components.

The control logic 126 can include the components of the integrated solenoid driver 104 internally or can be externally coupled thereto. The integrated solenoid driver 104 can be one chip, several chips within one encapsulation, or multiple components in a single package. Distributed configurations are also contemplated.

The control logic 126 can analyze the voltage 202 and current 204 in the digital domain for determining the error between the actual opening of the piston and the control signal as well as calculating error offsets. Illustratively, the control logic 126 can determine the timing of any of the BEMF peaks P1, P2, P3, and P4. These BEMF peaks correspond to movement of the plunger 110.

The integrated solenoid driver 104 can further include a voltage sensor 128 coupled to the solenoid 102. The voltage sensor 128 can detect the voltage 202 across the coil 108 of the solenoid 102 and is used when the solenoid 102 is in the tristated condition 406 of FIG. 4 and is used to detect the BEMF peaks P3, or P4 of FIG. 4.

The analog voltage detected by the voltage sensor 128 can be digitized by a voltage analog to digital converter (VADC 130). The digitized voltage, such as voltage 202, is provided to control logic 126 for processing.

On the other end of the valve control system 100, the valve 106 can include a valve piston 132 mechanically linked to the plunger 110 of the solenoid 102. The valve 106 is depicted as a simple normally closed on-off valve in an off position with the plunger 110 and valve piston 132 retracted.

It is contemplated that the valve 104 could be implemented in many configurations with components of the valve 104 in different layouts, shapes, or positions. The valve 104 will be understood as a mechanical component limiting or controlling flow.

When turned on, the plunger 110 and the valve piston 132 will be extended and the valve piston will connect an input line 134 with an output line 136 through a piston connection 138. When the valve 106 is closed the input line 134 is blocked by the valve piston 132. Other valves are contemplated including normally open valves, valves with multiple solenoids, and more input and output lines.

It has been discovered that the BEMF peaks, whether measured through current as in FIG. 2 or voltage as in FIG. 4, can be strong indicators that a service action is required. For example, if the P1, P2, P3, or P4 exceed time thresholds 140 from the S1 or S2 event, then this can indicate that a service action is required.

It is also contemplated that the amplitude of the BEMF peak in terms of either current or voltage, could be used to identify a service action is required. The amplitude could be between P1 and P2 or between P3 and P4 or that that exceed a current threshold 142 or a voltage thresholds 144. If the current threshold 142 or the voltage threshold 144 are exceeded, this can indicate that a service action is required. Thus, determining the service action could be based on either the timing or the amplitude of the BEMF peak.

The service action could include maintenance, cleaning, replacement, or repair of the valve or solenoid. The time thresholds 140 can be thresholds based on time between the BEMF peaks P1, P2, P3, or P4 and S1, S2. The time thresholds 140 can be thresholds based on time between the BEMF peaks and the S1 or the S2 event. The time thresholds 140 can be thresholds based on a percentage of the duty cycle of the control voltage.

It will be understood that the control logic 126 can be configured to couple to a coil 108 and to the plunger 110 such that a back electromotive force (BEMF) peak is created within the coil 108 based on the movable mechanism being moved, the control logic 126 can further be configured to: apply a control voltage to the coil 108 with the drive switches 116; detect the BEMF peak with the peak detection of FIGs. 3A, 3B, 5A and 5B and with the current sensor 122 coupled to the current analog to digital converter 124; determine a peak timing for the BEMF peak using digital sampling of the current or voltage, and adjust a control voltage timing for the control voltage based on the peak timing.

Referring now to FIG. 2, therein is shown a first timing diagram 200 for the valve control system 100 of FIG. 1, in a first embodiment. The first timing diagram 200 displays time along a horizontal axis and displays voltage and current along a vertical axis.

A control voltage 202 is shown with a dotted line as a square wave beginning at S1 and turning off at S2. The control voltage can also be PWM modulated for optimal control of the solenoid. In this case the dotted line represents the average cvalue of the PWM signal. As a response to the control voltage 202, a current 204 though the coil 108 of FIG. 1 is also shown.

Between S1 and S2 the control voltage 202 represents a control voltage ON signal while the control voltage 202 between S2 and a subsequent cycle 206 represents a control voltage OFF signal. The present configuration is provided for clarity and ease of understanding. However, it is contemplated that other configurations could be used with the valve control system 100 including configurations with inverted voltages and currents as well as configurations with multiple solenoids.

The error between the timing of the control voltage 202 and the actual opening and closing of the valve 106 of FIG. 1, indicated by local minimums and local maximums within the current 204, can be approximated with Equation 1, as

follows:

$$\alpha r - \alpha \cong \left( Tdc - Tdo + \frac{Ttc - Tto}{2} \right) \frac{1}{TPWM}$$

Equation 1

where "$\alpha r$" represents the actual mechanical duty cycle, "$\alpha$" represents the commanded electrical duty cycle, "Tso" represents an open time, "Tsc" represents a close time, "Tdc" represents a delay time for close, "Tdo" represents a delay time for open, "Ttc" represents a displacement time for close, "Tto" represents a displacement time for open, and "TPWM" represents the time for one PWM control signal ON-OFF cycle.

The Tso, Tsc, Tdc, Tdo, Ttc, Tto, and TPWM represent time durations, which are labeled and shown in FIG. 2 of the accompanying drawings. Tso can be expressed as the sum of Tdo and Tto while Tsc can be expressed as the sum of Tdc and Ttc. Equation 1 assumes linear approximations to model the displacement during Ttc and Tto which is normally a reasonable assumption.

The valve control system 100 consists in an adaptive control algorithm in which both the delay timings Tdo and Tdc and the displacement timings Tto and Ttc are measured for each ON-OFF cycle of control voltage 202, by monitoring the current 204 flowing into the solenoid 102 of FIG. 1 and by detecting local maximums and local minimums within the current profile. Local maximums are designated P1 and P3, while local minimums are designated P2 and P4.

Particularly, P1 depicts a local maximum during the open time Tso while P2 depicts a local minimum during the open time Tso. P1 represents initial movement of the plunger 110 after a delay Tdo measured from a start S1 of the control voltage.

P2 indicates an end to movement of the plunger 110. P3 depicts a local minimum during the close time Tsc while P4 depicts a local maximum during the close time Tsc.

IP1 can be understood as Ion, or the current when the valve 106 is turned on and begins to move open. IP3 can be understood as Ioff, or the current when the valve 106 is turned off and begins to move closed.

The peaks P1, P2, P3, and P4 are caused by the Back or Counter Electromotive Force (BEMF) generated by movements of the plunger 110 of FIG. 1 and are hence informative about the ON-OFF status and movement of the valve 106. The detection of these local maximum and minimum peaks can be done in analog but it is more commonly done in the digital domain. In this case ADCs are used to digitize the current 204 which are then processed by the control logic 126 of FIG. 1.

PWM control signals are depicted as S1, which corresponds to a control voltage ON signal and S2, which corresponds to a control voltage OFF signal. The TS1 and TS2 are known to the control logic 126 as they originate within the control logic 126. It is contemplated that the ON and OFF signals could be high and low voltage as shown but could also be inverted with low being ON and high being OFF, and further the ON and OFF signals could include positive and negative voltages.

P1, P2, P3, and P4 can be found by detecting local maximum and minimum in the waveform of the current 204. Several circuitries can be used for the detection. If processing is done in the digital domain, one approach can be to compare each current sample with its predecessor until a change in slope is detected. This algorithm is shown in more detail in FIGs. 3A and 3B.

From these local maximum and minimum peaks, parameters of interest can be calculated by the control logic 126 as follows:

$$Tdo = TP1 - TS1$$

Equation 2

$$Tto = TP2 - TP1$$

Equation 3

$$Tdc = TP3 - TS2$$

Equation 4

$$Ttc = TP4 - TP3$$

Equation 5

TP1, TP2, TP3, and TP4 represent the respective time of the local maximum or minimum referenced. TS1 and TS2 represent the time of the S1 event or the S2 event, respectively. These parameters are sufficient to calculate the error of Equation 1.

Although the valve control system 100 is depicted with a high control voltage 202 opening the valve 106, it is contemplated that other circuit layouts could be used including a high control voltage 202 used to close the valve 106.

Referring now to FIG. 3A, therein is shown a first portion of a flow chart 300 for the valve control system 100 of FIG.

1 and the timing diagram 200 of FIG. 2. These operational steps for the valve control system 100 can be implemented utilizing instructions running on the processor or control logic 126 of FIG. 1, which controls the technical process or the internal functioning of the control logic 126.

The control flow can begin with a solenoid inactive step 302 where the sample current (IS) is approximately zero and the sample voltage (VS) is approximately zero and the solenoid is in an inactive state. A VON step 304 can be initiated to turn on the control voltage 202 of FIG. 2 at S1, during which time the control voltage 202 is applied to the coil 108 of FIG. 1. When the VON step 304 is initiated, the IP1 current variable is set to zero and the TON counter is started.

Once the VON step 304 is completed, a P1 wait step 306 can be initiated. During the P1 wait step 306, the control logic 126 will wait one or more clock periods and then sample IS.

Once IS is sampled, an IP1 increase decision 308 can be determined. If the IS is above the previously set IP1, then the IP1 increase decision 308 will return a True value and an IP1 update step 310 will be executed, which sets IP1 to IS, the last sampled current.

During the IP1 update step 310 Tdo is set to Tnow - TS1, which is the current number of clock periods since the S1 event. If the IS is below the previously set IP1, then the IP1 increase decision 308 can return a False value and an IP1 past threshold decision 312 can be determined.

If IS is not below the previously set IP1 minus a threshold, the IP1 past threshold decision 312 will return a False value and the valve control system 100 can reexecute the P1 wait step 306. If IS is below the previously set IP1 minus a threshold, the IP1 past threshold decision 312 can return a True value. The IP1 past threshold decision 312 can ensure the detection of P1 is not triggered by noise or small fluctuations in the current 204 of FIG. 2.

It has been discovered that the steps taken to identify P1, including the wait step 306, the IP1 increase decision 308, and the IP1 update step 310 can together determine the local maximum P1, which is localized during the Tso. P1 represents the time when the valve 108 begins to move. It has further been discovered that the identification of P1 allows for the calculation of Tdo, or the delay time, from the S1 (the control voltage 202 ON event) and extending to the time when the valve 106 of FIG. 1 begins to move at P1. The IP1 past threshold decision 312 also helps to avoid oversensitive triggering.

Once the IP1 past threshold decision 312 returns a True value the valve control system 100 can identify Tdo as the Tnow - TS1 and execute an IP2 update step 314. During the IP2 update step 314, IP2 is set to IS, the last sampled current. Furthermore, during the IP2 update step 314 Tto is set to Tnow - Tdo, which is the current number of clock periods since the Tdo event.

After executing the IP2 update step 314, the valve control system 100 can execute a P2 wait step 316. During the P2 wait step 316, the control logic 126 will wait one or more clock periods and then sample IS.

Once IS is sampled, an IP2 decrease decision 318 can be determined. If the IS is below the previously set IP2, then the IP2 decrease decision 318 will return a True value and the IP2 update step 314 will be reexecuted.

If the IS is above the previously set IP2, then the IP2 decrease decision 318 can return a False value and an IP2 increase decision 320 can be determined. If the IS is not above the IP2, a False value can be returned meaning the local P2 minimum has not been identified and the P2 wait step 316 can be reexecuted. If the IS is above the IP2, the IP2 increase decision 320 can return a True value and the valve control system 100 can identify Tto as the Tnow - Tdo.

It has been discovered that the steps taken to identify P2, including the IP2 update step 314, the P2 wait step 316, the IP2 decrease decision 318, and the IP2 increase decision 320 can together determine the local minimum P2, which is localized during the Tso. P2 represents the time when the valve 108 stops moving completing its cycle. It has been further discovered that the identification of P2 allows the calculation of the Tso, or the time to completely open for the valve 106, beginning at the S1 (the control voltage 202 ON event) and extending to the time when the valve 106 stops moving at P2.

Once the IP2 increase decision 320 returns the True value identifying the local minimum P2, the valve control system 100 can execute an S2 wait step 322. It is contemplated that thresholds, such as the threshold used in the IP1 past threshold decision 312 can be used with the IP2 decrease decision 318 and the IP2 increase decision 320 in order to make the determinations less sensitive to noise. However, in order to avoid obscuring the valve control system 100, these are not shown.

The steps: P1 wait step 306, IP1 increase decision 308, IP1 update step 310, IP1 past threshold decision 312, IP2 update step 314, P2 wait step 316, IP2 decrease decision 318, and IP2 increase decision 320 can be considered the Tso measurement or the open time measurement.

During the S2 wait step 322, the control logic 126 keeps sampling the current 204 at the internal clock pace and keeps updating the IP3 variable until the valve is commanded OFF; that is, when the control voltage 202 is turned OFF. When this occurs, the S2 event decision 324 can return a True value.

If control voltage 202 is kept ON and the control voltage 202 not removed from the coil 108, the S2 event decision 324 will return a False value and the IP3 S2 update step 326 will be executed where the IP3 is set to the IS. Once IP3 is set to IS the S2 wait step 322 can be reexecuted.

If control voltage 202 is turned OFF and the control voltage 202 is removed from the coil 108, the S2 event decision 324 will return a True value indicating the S2 event has been detected. When the S2 event is detected, the valve control system 100 can initiate the control flow at 3B 1 of FIG. 3B.

Referring now to FIG. 3B, therein is shown a second portion of a flow chart 300 for the valve control system 100 of FIG. 1 and the timing diagram 200 of FIG. 2. The valve control system 100 can begin at 3B 1 with a P3 wait step 328. During the P3 wait step 328, the control logic 126 of FIG. 1 will wait one or more clock periods and then sample IS.

Once IS is sampled, an IP3 decrease decision 330 can be determined. If the IS is below the previously set IP3, then the IP3 decrease decision 330 will return a True value and an IP3 update step 332 will be executed, which sets IP3 to IS, the last sampled current.

During the IP3 update step 332 Tdc is set to Tnow - TS2, which is the current number of clock periods since the S2 event. After the IP3 update step 332, the valve control system 100 can then reexecute the P3 wait step 328. If the IS is above the previously set IP3, then the IP3 decrease decision 330 can return a False value and an IP3 past threshold decision 334 can be determined.

If IS is not above the previously set IP3 plus a threshold, the IP3 past threshold decision 334 will return a False value and reexecute the P3 wait step 328. If IS is above the previously set IP3 plus a threshold, the IP3 past threshold decision 334 can return a True value. The IP3 past threshold decision 334 can ensure the detection of P3 is not triggered by noise or small fluctuations in the current 204 of FIG. 2. Once the IP3 past threshold decision 334 returns a True value the valve control system 100 can identify Tdc as the Tnow - TS2 and execute an IP4 update step 336.

It has been discovered that the steps taken to identify P3, including the P3 wait step 328, the IP3 decrease decision 330, and the IP3 update step 332 can together determine the local minimum P3, which is localized during the Tsc. P3 represents the time when the valve 108 of FIG. 1 begins to move. It has further been discovered that the identification of P3 allows for the calculation of Tdc, or the delay time, from the S2 (the control voltage 202 OFF event) and extending to the time when the valve 106 of FIG. 1 begins to move at P3. The IP3 past threshold decision 334 also helps to avoid oversensitive triggering.

During the IP4 update step 336, IP4 is set to IS, the last sampled current. Furthermore, during the IP4 update step 336, Ttc is set to Tnow - Tdc, which is the current number of clock periods since the Tdc event. After executing the IP4 update step 336, the valve control system 100 can execute a P4 wait step 338. During the P4 wait step 338, the control logic 126 will wait one or more clock periods and then sample IS.

Once IS is sampled, an IP4 increase decision 340 can be determined. If the IS is above the previously set IP4, then the IP4 increase decision 340 will return a True value and the IP4 update step 336 will be reexecuted.

If the IS is below the previously set IP4, then the IP4 increase decision 340 can return a False value and an IP4 decrease decision 342 can be determined. If the IS is above the IP4, a False value can be returned meaning the local P4 minimum has not been identified and the P4 wait step 338 can be reexecuted. If the IS is below the IP4, the IP4 decrease decision 342 can return a True value and the valve control system 100 can identify Ttc as the Tnow - Tdc.

It has been discovered that the steps taken to identify P4, including the IP4 update step 336, the P4 wait step 338, the IP4 increase decision 340, and the IP4 decrease decision 342 can together determine the local maximum P4, which is localized during the Tsc. P4 represents the time when the valve 108 stops moving completing its cycle. It has been further discovered that the identification of P4 allows the calculation of the Tsc, or the time to completely close for the valve 106, beginning at the S2 (the control voltage 202 OFF event) and extending to the time when the valve 106 stops moving at P4.

Once the IP4 decrease decision 342 returns the True value identifying the local maximum P4, the valve control system 100 can execute a parameter step 344. It is contemplated that thresholds, such as the threshold used in the IP3 past threshold decision 334 can be used with the IP4 increase decision 340 and the IP4 decrease decision 342 in order to make the determinations less sensitive to noise. However, in order to avoid obscuring the valve control system 100, these are not shown.

The steps: P3 wait step 328, IP3 decrease decision 330, IP3 update step 332, IP3 past threshold decision 334, IP4 update step 336, P4 wait step 338, IP4 increase decision 340, and IP4 decrease decision 342 can be considered the Tsc measurement or the close time measurement.

The parameter step 344 can provide the variables Tso, Tdo, Tto, Tsc, Tdc, and Ttc. These parameters can be used in the calculate error step 346 according to Equation 6, as follows:

$$Err = Tdc - Tdo + \frac{(Ttc - Tto)}{2} \qquad\qquad \text{Equation 6}$$

Once the error is calculated in the calculate error step 346, the valve control system 100 can execute a calculate TON control step 348 according to Equation 7, as follows:

$$TON_{CNT} = TS2 - TS1 - Err \qquad\qquad \text{Equation 7}$$

The TONCNT is the control voltage 202 including the Err offset which adjusts the time of the control voltage 202.

This will compensate for the mismatch between the control voltage signal and the response of the valve 106.

The TONCNT can be the control voltage ON timing for the subsequent cycle 206 of the control voltage 202. As will be appreciated, the TONCNT can be based on one or more of the BEMF peaks. Furthermore, control signals for a control voltage OFF timing or for a control voltage ON/OFF can also be determined based on one or more of the BEMF peaks.

The control voltage 202 can provide adjustments to control the times that the valve 106 begins to open at P1, stops opening at P2, begins to close at P3, and stops closing at P4. Depending on the application, each of these peaks can be controlled and calibrated at every open-close cycle of the valve 106.

Once the new TON is calculated in calculate TON control step 348, the value can be used to set the timing for the next S1 or the control voltage 202 ON event. The valve control system 100 will execute a wait for S1 step 350, which will be initiated in the VON step 304 of FIG. 3A as the valve control system 100 continues at 3A1 of FIG. 3A.

The local maximums P1 and P3 and the local minimums P2 and P4 can be understood as peaks during the ON-OFF control cycle of the control voltage 202. The first two peaks, P1 and P2, can demarcate a beginning and end to movement of the valve 106 during an opening cycle and can also be used to determine a delay between the control voltage ON signal and the beginning of movement. The second two peaks, P3 and P4, can demarcate a beginning and end to movement of the valve 106 during a close cycle can also be used to determine a delay between the control voltage OFF signal and the beginning of movement.

It has been unexpectedly discovered that calculating the error and new control voltage based on the error allows the valve control system 100 to operate the valve 106 with a high degree of timing accuracy without being negatively impacted by heat, contamination, humidity, or other environmental factors that can change the speed of valves in practice. Instead, the valve control system 100 can be adjusted during each cycle to account for these parameters.

Furthermore, it has been discovered that the valve control system 100 can operate with a high degree of timing accuracy without being negatively impacted by fluid viscosity, fluid purity, or other characteristics of the materials within the valve that change the speed of the valve in practice. Yet further, the valve control system 100 can operate with a high degree of timing accuracy even as the valve ages, or throughout maintenance cycles, and deferred maintenance because as the age or maintenance of the valve changes, the valve will be continuously calibrated at every cycle, when normally a calibration is performed only when initially produced.

Referring now to FIG. 4, therein is shown a second timing diagram 400 for the valve control system 100 of FIG. 1, in a second embodiment. The timing diagram 400 applies to the conditions when the closing movement of the plunger 110 of FIG. 1 occurs after the coil 108 of FIG. 1 is fully de-energized. The first timing diagram 400 displays time along a horizontal axis and displays voltage and current along a vertical axis.

A control voltage 402 is shown with a dotted line as a square wave beginning at S1 and turning off at S2. The control voltage can also be PWM modulated for optimal control of the solenoid. In this case the dotted line represents the average cvalue of the PWM signal. The control voltage 402 is also shown with a BEMF voltage spike occurring after the coil current 404 goes to zero. This can be due to friction or Eddy currents stored into the solenoid core which delays the mechanical movement so that it occurs when the solenoid is fully de-energized. To ease the BEMF spike observation, the driver is in a tristated condition 406 as soon as the current reaches the zero level; the voltage 402 measured, instead of the current 404, is observed for P3 and P4 as shown below with regard to the tristate command step 548 of FIG. 5. As a response to the control voltage 402, a current 404 though the coil 108 is also shown.

The error between the timing of the control voltage 402 and the actual opening and closing of the valve 106 of FIG. 1, indicated by local minimums and local maximums within the current 404 and voltage 402 profiles, can be approximated with Equation 1, above.

The valve control system 100 consists in an adaptive control algorithm in which both the delay timings Tdo and Tdc and the displacement timings Tto and Ttc are measured for each ON-OFF cycle of control voltage 402, by monitoring the current 404 flowing into the solenoid 102 of FIG. 1 and the voltage 402 when the driver is in the tristated condition 406. Local maximums and local minimums within the current profile are detected when the valve opens. Local maximums and local minimums within the voltage profile are detected when the valves closes. Local maximums are designated P1 and P3, while local minimums are designated P2 and P4.

Particularly, P1 depicts a local maximum during the open time Tso while P2 depicts a local minimum during the open time Tso. Similarly, P3 depicts a local minimum during the close time Tsc while P4 depicts a local maximum during the close time Tsc.

IP1 can be understood as Ion, or the current when the valve is turned on and begins to move open. VP4 can be understood as the BEMF Voltage peak when the valve is turned off and begins to move closed.

The peaks P1, P2, P3, and P4 are caused by the Back Electromotive Force (BEMF) generated by movements of the plunger 110 and are hence informative about the ON-OFF status and movement of the valve 106. In the case where the coil 108 is de-energized, the BEMF peak will be observable in the voltage of the coil rather than current.

The detection of these local maximum and minimum peaks can be done in analog but it is more commonly done in the digital domain. In this case ADCs are used to digitize the current 404 and voltages 402 which are then processed by the control logic 126 of FIG. 1.

PWM control signals are depicted as S1, which corresponds to an ON command and S2, which corresponds to an OFF command. The TS1 and TS2 are known to the control logic 126 as they originate within the control logic 126.

P1 and P2 can be found by detecting local maximum and minimum in the waveform of the current 404. P3, and P4 can be found by detecting local maximum and minimum in the waveform of the voltage 402 across the solenoid 402. Several circuitries can be used for the detection. If processing is done in the digital domain, one approach can be to compare each current sample with its predecessor until a change in slope is detected. This algorithm is shown in more detail in FIGs. 5A and 5B.

From these local maximum and minimum peaks, parameters of interest can be calculated by the control logic 126 and based on Equations 2-5, above.

TP1, TP2, TP3, and TP4 represent the respective time of the local maximum or minimum referenced. TS1 and TS2 represent the time of the S1 event or the S2 event, respectively. These parameters are sufficient to calculate the error of Equation 1.

The tristated condition 406 is shown when the closing movement of the plunger 110 occurs after the coil 108 is fully de-energized. This can indicate that the integrated solenoid driver 104 of FIG. 1 is neither pulling the second connection 114 of FIG. 1 up or down and when the integrated solenoid driver 104 is in a high-impedance state with a high resistance between the second connection 114 and high or low voltage.

Although the valve control system 100 is depicted with a high control voltage 402 opening the valve 106, it is contemplated that other circuit layouts could be used including a high control voltage 402 used to close the valve 106.

Referring now to FIG. 5A, therein is shown a first portion of a flow chart 500 for the valve control system 100 of FIG. 1 and the timing diagram 400 of FIG. 4 including the conditions when the closing movement of the plunger 110 of FIG. 1 occurs after the coil 108 of FIG. 1 is fully de-energized. These operational steps for the valve control system 100 can be implemented utilizing instructions running on the control logic 126 of FIG. 1, which controls the technical process or the internal functioning of the control logic 126.

The control flow can begin with a solenoid inactive step 502 where the sample current (IS) is approximately zero and the sample voltage (VS) is approximately zero and the solenoid is in an inactive state. A VON step 504 can be initiated to turn on the control voltage 402 of FIG. 4 at S1, during which time the control voltage 402 is applied to the coil 108. When the VON step 504 is initiated, the IP1 current variable is set to zero and the TON counter is started.

Once the VON step 504 is completed, a P1 wait step 506 can be initiated. During the P1 wait step 506, the control logic 126 will wait one or more clock periods and then sample IS.

Once IS is sampled, an IP1 increase decision 508 can be determined. If the IS is above the previously set IP1, then the IP1 increase decision 508 will return a True value and an IP1 update step 510 will be executed, which sets IP1 to IS, the last sampled current.

During the IP1 update step 510 Tdo is set to Tnow - TS1, which is the current number of clock periods since the S1 event. If the IS is below the previously set IP1, then the IP1 increase decision 508 can return a False value and an IP1 past threshold decision 512 can be determined.

If IS is not below the previously set IP1 minus a threshold, the IP1 past threshold decision 512 will return a False value and the valve control system 100 will reexecute the P1 wait step 506. If IS is below the previously set IP1 minus a threshold, the IP1 past threshold decision 512 can return a True value. The IP1 past threshold decision 512 can ensure the detection of P1 is not triggered by noise or small fluctuations in the current 404 of FIG. 4.

It has been discovered that the steps taken to identify P1, including the wait step 506, the IP1 increase decision 508, and the IP1 update step 510 can together determine the local maximum P1, which is localized during the Tso. P1 represents the time when the valve 108 begins to move. It has further been discovered that the identification of P1 allows for the calculation of Tdo, or the delay time, from the S1 (the control voltage 402 ON event) and extending to the time when the valve 106 of FIG. 1 begins to move at P1. The IP1 past threshold decision 512 also helps to avoid oversensitive triggering.

Once the IP1 past threshold decision 512 returns a True value the valve control system 100 can identify Tdo as the Tnow - TS1 and execute an IP2 update step 514. During the IP2 update step 514, IP2 is set to IS, the last sampled current. Furthermore, during the IP2 update step 514 Tto is set to Tnow - Tdo, which is the current number of clock periods since the Tdo event.

After executing the IP2 update step 514, the valve control system 100 can execute a P2 wait step 516. During the P2 wait step 516, the control logic 126 will wait one or more clock periods and then sample IS.

Once IS is sampled, an IP2 decrease decision 518 can be determined. If the IS is below the previously set IP2, then the IP2 decrease decision 518 will return a True value and the IP2 update step 514 will be reexecuted.

If the IS is above the previously set IP2, then the IP2 decrease decision 518 can return a False value and an IP2 increase decision 520 can be determined. If the IS is not above the IP2, a False value can be returned meaning the local P2 minimum has not been identified and the P2 wait step 516 can be reexecuted. If the IS is above the IP2, the IP2 increase decision 520 can return a True value and the valve control system 100 can identify Tto as the Tnow - Tdo.

It has been discovered that the steps taken to identify P2, including the IP2 update step 514, the P2 wait step 516, the IP2 decrease decision 518, and the IP2 increase decision 520 can together determine the local minimum P2, which is localized during the Tso. P2 represents the time when the valve 108 stops moving completing its cycle. It has been further discovered that the identification of P2 allows the calculation of the Tso, or the time to completely open for the valve 106, beginning at the S1 (the control voltage 402 ON event) and extending to the time when the valve 106 stops moving at P2.

Once the IP2 increase decision 520 returns the True value identifying the local minimum P2, the valve control system 100 can execute an S2 wait step 522. It is contemplated that thresholds, such as the threshold used in the IP1 past threshold decision 512 can be used with the IP2 decrease decision 518 and the IP2 increase decision 520 in order to make the determinations less sensitive to noise. However, in order to avoid obscuring the valve control system 100, these are not shown.

The steps: P1 wait step 506, IP1 increase decision 508, IP1 update step 510, IP1 past threshold decision 512, IP2 update step 514, P2 wait step 516, IP2 decrease decision 518, and IP2 increase decision 520 can be considered the Tso measurement or the open time measurement.

During the S2 wait step 522, the control logic 126 keeps sampling the current 404 at the internal clock pace and keeps updating the IP3 variable until the valve is commanded OFF; that is, when the control voltage 402 is turned OFF. When this occurs, the S2 event decision 524 can return a True value.

If control voltage 402 is kept ON and the control voltage 402 is not removed from the coil 108, the S2 event decision 524 will return a False value and the IP3 S2 update step 526 will be executed where the IP3 is set to the IS. Once IP3 is set to IS the S2 wait step 522 can be reexecuted.

If the control voltage 402 is turned OFF and the control voltage 402 is removed from the coil 108, the S2 event decision 524 will return a True value indicating the S2 event has been detected or determined. When the S2 event is detected or determined, the valve control system 100 can initiate the control flow at 5B1 of FIG. 5B.

Referring now to FIG. 5B, therein is shown a second portion of a flow chart for the valve control system 100 of FIG. 1 and the timing diagram 400 of FIG. 4. The valve control system 100 can begin at 5B1 with a P3 wait step 528. During the P3 wait step 528, the control logic 126 of FIG. 1 will wait one or more clock periods and then sample IS.

Once IS is sampled, an IP3 decrease decision 530 can be determined. If the IS is below the previously set IP3, then the IP3 decrease decision 530 will return a True value and an IP3 update step 532 will be executed, which sets IP3 to IS, the last sampled current.

During the IP3 update step 532 Tdc is set to Tnow - TS2, which is the current number of clock periods since the S2 event. After the IP3 update step 532, the valve control system 100 can execute a current zeroed decision 534.

The current zeroed decision 534 can determine whether the current 404 of FIG. 4 is near or at zero. If the current 404 is not near or at zero, the current zeroed decision 534 can return a False value, which indicates that the integrated solenoid driver 104 of FIG. 1 is not in a tristate configuration. After the current zeroed decision 534 returns a False value, the valve control system 100 can then reexecute the P3 wait step 528. It is contemplated that at or near zero could include a current that crosses zero and reverses flow, or a current that falls below a threshold of a percentage of the drive current, such as less than 5% of the drive current.

During the IP3 decrease decision 530, if the IS is above the previously set IP3, then the IP3 decrease decision 530 can return a False value and an IP3 past threshold decision 536 can be determined. If IS is not above the previously set IP3 plus a threshold, the IP3 past threshold decision 536 will return a False value and reexecute the P3 wait step 528.

If IS is above the previously set IP3 plus a threshold, the IP3 past threshold decision 536 can return a True value. The IP3 past threshold decision 536 can ensure the detection of P3 is not triggered by noise or small fluctuations in the current 404.

Once the IP3 past threshold decision 536 returns a True value the valve control system 100 can identify Tdc as the Tnow - TS2 and execute an IP4 update step 538.

It has been discovered that the steps taken to identify P3, including the P3 wait step 528, the IP3 decrease decision 530, and the IP3 update step 532 can together determine the local minimum P3, which is localized during the Tsc. P3 represents the time when the valve 108 of FIG. 1 begins to move. It has further been discovered that the identification of P3 allows for the calculation of Tdc, or the delay time, from the S2 (the control voltage 402 OFF event) and extending to the time when the valve 106 of FIG. 1 begins to move at P3. The IP3 past threshold decision 536 also helps to avoid oversensitive triggering.

During the IP4 update step 538, IP4 is set to IS, the last sampled current. Furthermore, during the IP4 update step 538, Ttc is set to Tnow - Tdc, which is the current number of clock periods since the Tdc event. After executing the IP4 update step 538, the valve control system 100 can execute a P4 wait step 540. During the P4 wait step 540, the control logic 126 will wait one or more clock periods and then sample IS.

Once IS is sampled, an IP4 increase decision 542 can be determined. If the IS is above the previously set IP4, then the IP4 increase decision 542 will return a True value and the IP4 update step 538 will be reexecuted.

If the IS is below the previously set IP4, then the IP4 increase decision 542 can return a False value and an IP4 decrease decision 544 can be determined. If the IS is above the IP4, a False value can be returned meaning the local P4 minimum has not been identified and the P4 wait step 540 can be reexecuted. If the IS is below the IP4, the IP4 decrease decision 544 can return a True value and the valve control system 100 can identify Ttc as the Tnow - Tdc.

It has been discovered that the steps taken to identify P4, including the IP4 update step 538, the P4 wait step 540, the IP4 increase decision 542, and the IP4 decrease decision 544 can together determine the local maximum P4, which is localized during the Tsc. P4 represents the time when the valve 108 stops moving completing its cycle. It has been further discovered that the identification of P4 allows the calculation of the Tsc, or the time to completely close for the valve 106, beginning at the S2 (the control voltage 402 OFF event) and extending to the time when the valve 106 stops moving at P4.

If, on the other hand, during the current zeroed decision 534 the current 404 is near or at zero, the current zeroed decision 534 can return a True value. The valve control system 100 can then implement a tristate command step 548 in which the solenoid driver 104 is commanded in the tristated condition 406 of FIG. 4 with high impedance between high and low supply voltages. This way the subsequent BEMF voltage peak due to the mechanical movement while the valves closes can be more conveniently detected. During the tristated condition 406 of FIG. 4, P3 and P4 are determined by voltage 402 measured and digitized with an analog to digital converter.

The valve control system 100 can execute a P3 voltage wait step 550. During the P3 voltage wait step 550, the control logic 126 will wait one or more clock periods and then sample VS.

Once VS is sampled, a VS below threshold decision 552 can be determined. If the VS is below a voltage threshold VT, then the VS below threshold decision 552 will return a True value and an Tdc update step 554 will be executed, which sets Tdc to Tnow - TS2, which is the current number of clock periods since the S2 event. After the Tdc update step 554, the valve control system 100 can reexecute the P3 voltage wait step 550.

If the VS is above a voltage threshold VT, then a False value will be returned and the P3 and Tdc will be identified and a VP4 update step 556 will be executed.

It has been discovered that the steps taken to identify P3, including the P3 voltage wait step 550, the VS below threshold decision 552, and the Tdc update step 554 can together determine P3, which is localized during the Tsc. P3 represents the time when the valve 108 begins to move. It has further been discovered that the identification of P3 allows for the calculation of Tdc, or the delay time, from the S2 (the control voltage 402 OFF event) and extending to the time when the valve 106 begins to move at P3.

Once P3 has been identified the valve control system 100 will execute the VP4 update step 556 where the VP4 will be set to VS, the last measured voltage. After the VP4 update step 556 the valve control system 100 will execute a P4 voltage wait step 558.

During the P4 voltage wait step 558, the control logic 126 will wait one or more clock periods and then sample VS. Once VS is sampled, a VP4 increase decision 560 can be determined. If the VS is above the previously set VP4, then the VP4 increase decision 560 will return a True value and the VP4 update step 556 will be reexecuted.

If the VS is below the previously set VP4, then the VP4 increase decision 560 can return a False value and P4 and the Ttc as Tnow - Tdc is determined.

It has been discovered that the steps taken to identify P3, including the VP4 update step 556, the P4 voltage wait step 558, and the VP4 increase decision 560 can together determine the local maximum P4, which is localized during the Tsc. P4 represents the time when the valve 108 stops moving completing its cycle. It has been further discovered that the identification of P4 allows the calculation of the Tsc, or the time to completely close for the valve 106, beginning at the S2 (the control voltage 402 OFF event) and extending to the time when the valve 106 stops moving at P4.

Once the IP4 decrease decision 544 returns the True value identifying the local maximum P4 or the VP4 increase decision 560 returns the False value identifying the local maximum P4, the valve control system 100 can execute a parameter step 562. It is contemplated that thresholds, such as the threshold used in the IP3 past threshold decision 536 can be used with the IP4 increase decision 542 and the IP4 decrease decision 544 in order to make the determinations less sensitive to noise. However, in order to avoid obscuring the valve control system 100, these are not shown.

The steps: P3 wait step 528, IP3 decrease decision 530, IP3 update step 532, IP3 past threshold decision 536, IP4 update step 538, P4 wait step 540, IP4 increase decision 542, and IP4 decrease decision 544 can be considered the Tsc measurement or the close time measurement.

The parameter step 562 can provide the variables Tso, Tdo, Tto, Tsc, Tdc, and Ttc. These parameters can be used in the calculate error step 564 according to Equation 6, above.

Once the error is calculated in the calculate error step 564, the valve control system 100 can execute a calculate TON control step 566 according to Equation 7, above.

The TONCNT is the control voltage 402 including the Err offset which adjusts the time of the control voltage 402. This will compensate for the mismatch between the control voltage signal and the response of the valve 106.

The control voltage 402 can provide adjustments to control the times that the valve 106 begins to open at P1, stops opening at P2, begins to close at P3, and stops closing at P4. Depending on the application, each of these peaks can be controlled and calibrated at every open-close cycle of the valve 106.

Once the new TON is calculated in calculate TON control step 566, the value can be used to set the timing for the next S1 or the control voltage 402 ON event. The valve control system 100 will execute a wait for S1 step 568, which will be initiated in the VON step 504 of FIG. 5A as the valve control system 100 continues at 5A1 of FIG. 5A.

The local maximums P1 and P3 and the local minimums P2 and P4 can be understood as peaks during the ON-OFF control cycle of the control voltage 202 and current 204. The first two peaks, P1 and P2, can demarcate a beginning and end to movement of the valve 106 during an opening cycle and can also be used to determine a delay between the control voltage ON signal and the beginning of movement. The second two peaks, P3 and P4, can demarcate a beginning and end to movement of the valve 106 during a close cycle can also be used to determine a delay between the control voltage OFF signal and the beginning of movement.

It has been unexpectedly discovered that calculating the error and new control voltage based on the error allows the valve control system 100 to operate the valve 106 with a high degree of timing accuracy without being negatively impacted by heat, contamination, humidity, or other environmental factors that can change the speed of valves in practice. Instead, the valve control system 100 can be adjusted during each cycle to account for these parameters.

Furthermore, it has been discovered that the valve control system 100 can operate with a high degree of timing accuracy without being negatively impacted by fluid viscosity, fluid purity, or other characteristics of the materials within the valve that change the speed of the valve in practice. Yet further, the valve control system 100 can operate with a high degree of timing accuracy even as the valve ages, or throughout maintenance cycles, and deferred maintenance because as the age or maintenance of the valve changes, the valve will be continuously calibrated at every cycle, when normally a calibration is performed only when initially produced.

The processes disclosed cannot practically be performed in the human mind, for instance the human mind is not equipped to read current and voltage, determine local maximums and minimums, for each PWM cycle. These steps could not therefore, as a practical matter, be performed entirely in a human mind.

Applicant respectfully submits that applying a control voltage to a coil, the coil communicatively coupled to a movable mechanism such that a BEMF peak is created within the coil based on the movable mechanism being moved; detecting the BEMF peak with a current sensor; determining a first timing for the BEMF peak; and adjusting a second timing for a subsequent cycle of the control voltage based on the first timing improve valve control technologies because the timing of the control voltage can be adjusted every cycle based on actual response of the valve. This greatly increases the accuracy of the valve control system over previous solutions that calibrated valves only once at manufacturing or installation.

Furthermore, the method requires the manipulation of computer data structures including digitized current, voltage, and local maximums and minimums together with the output of a time-modified voltage command. The elements of identifying the time of the local maximums and minimums reflect an improvement in the functioning of a valve control system 100, and to solenoid driven valves particularly.

The solution of providing time-modified control voltages based on local current maximums and minimums is necessarily rooted in valve control systems in order to overcome the timing errors that commonly occur with valves.

The control flows of FIGs. 3A, 3B, 5A, and 5B control the technical process and the internal functioning of the control logic 126, the switch controller 120, the drive switches 116, and the solenoid 102 itself. They inherently comprise, or reflect, corresponding technical features of the opening time and closing time of the valve, the solenoid, and the triggering of these components. The disclosure and claims provide teaching that comprise instructions for the solution of a specific technical problem of valve time inaccuracies and drifting calibrations by the technical solution of digitizing current, identifying local maximums and minimums, and providing a time correction each cycle of the PWM control signal.

One contemplated embodiment includes: a valve control system comprising: a coil; a movable mechanism communicatively coupled to the coil such that a back electromotive force (BEMF) peak is created within the coil based on the movable mechanism being moved; a drive switch configured to apply a control voltage to the coil; a sensor configured to detect the BEMF peak; and a control logic configured to: determine a first timing for the BEMF peak, and adjust a second timing for a subsequent cycle of the control voltage based on the first timing.

The system wherein: the BEMF peak indicates initial movement of the movable mechanism after a delay measured from a start of the control voltage. The system wherein: the BEMF peak is measured against a threshold to determine whether a service action is required. The system wherein: the BEMF peak is a second BEMF peak based on the control voltage being applied to the coil, the second BEMF peak indicates an end to movement of the movable mechanism.

The system wherein: the control logic is configured to adjust the second timing for the subsequent cycle of the control voltage according to Equation 7. The system wherein: the control logic is configured to determine the BEMF peak based on a current in the coil being past a threshold.

The system wherein: the drive switch is configured to turn the control voltage to the coil off; the sensor is configured to detect a second BEMF peak based on the control voltage to the coil being off; and the control logic is configured to determine a third timing for the second BEMF peak and adjust an off timing for the subsequent cycle of the control voltage based on the third timing. The system wherein: the control logic is configured to determine the BEMF peak based on a voltage.

Another contemplated embodiment includes: a non-transitory computer readable medium in useful association with a processor having instructions configured to: apply a control voltage to a coil, the coil communicatively coupled to a movable mechanism such that a BEMF peak is created within the coil based on the movable mechanism being moved;

determine the BEMF peak and a first timing for the BEMF peak; and adjust a second timing for a subsequent cycle of the control voltage based on the first timing.

The non-transitory computer readable wherein the instructions are configured to: identify initial movement of the movable mechanism based on the BEMF peak after a delay measured from a start of the control voltage. The non-transitory computer readable wherein the instructions are configured to: measure the BEMF peak against a threshold to determine whether a service action is required. The non-transitory computer readable wherein the instructions are configured to: identify the BEMF peak as a second BEMF peak based on the control voltage being applied to the coil, the second BEMF peak indicates an end to movement of the movable mechanism.

The non-transitory computer readable wherein the instructions are configured to: adjust the second timing for the subsequent cycle of the control voltage according to Equation 7. The non-transitory computer readable wherein the instructions are configured to: determine the BEMF peak based on a current in the coil being past a threshold.

The non-transitory computer readable of claim 8 wherein the instructions are configured to: turn the control voltage to the coil off; detect a second BEMF peak based on the control voltage to the coil being off; determine a third timing for the second BEMF peak; and adjust an off timing for the subsequent cycle of the control voltage based on the third timing. The non-transitory computer readable wherein the instructions are configured to: determine the BEMF peak based on a voltage.

Yet another contemplated embodiment includes: a method of operating a valve control system comprising: applying a control voltage to a coil, the coil communicatively coupled to a movable mechanism such that a BEMF peak is created within the coil based on the movable mechanism being moved; detecting the BEMF peak with a sensor; determining a first timing for the BEMF peak; and adjusting a second timing for a subsequent cycle of the control voltage based on the first timing.

The method wherein: detecting the BEMF peak includes detecting an initial movement of the movable mechanism after a delay measured from a start of the control voltage. The method further comprising: measuring the BEMF peak against a threshold to determine whether a service action is required. The method wherein: detecting the BEMF peak includes detecting a second BEMF peak based on the control voltage being applied to the coil, the second BEMF peak indicates an end to movement of the movable mechanism.

The method wherein: adjusting the second timing for the subsequent cycle of the control voltage includes adjusting the second timing according to Equation 7. The method further comprising: determining the BEMF peak based on a current in the coil being past a threshold.

The method further comprising: turning the control voltage to the coil off; detecting a second BEMF peak based on the control voltage to the coil being off; determining a third timing for the second BEMF peak; and adjusting an off timing for the subsequent cycle of the control voltage based on the third timing. The method wherein: detecting the BEMF peak includes detecting the BEMF peak as a voltage.

Thus, it has been discovered that the valve control system furnishes important and heretofore unknown and unavailable solutions, capabilities, and functional aspects. The resulting configurations are straightforward, cost-effective, uncomplicated, highly versatile, accurate, sensitive, and effective, and can be implemented by adapting known components for ready, efficient, and economical manufacturing, application, and utilization.

In real world applications debris accumulation, plant growth, and crystallization from liquid solutions can change the mass of valve components and deferred maintenance can change the roughness of the components. These environmental consequences can have large impacts on the actual movement and timing of a valve.

When valves are only calibrated once during manufacturing or implementation, these environmental consequences can drastically change the operation of the valve making them imprecise. It has been discovered that the S1 and the S2 events can be moved forward to account for the delays Tdo and Tdc, as well as the total movement time Tso and Tsc.

Accounting for these times can allow the valve system to operate at great precision regardless of deferred maintenance and debris accumulation or other environmental factors. Furthermore, the solution requires no external sensors and relies only on a current sensor and an ADC to detect and digitize current or voltage through the solenoid.

Tdo, Tdc, Tto, Ttc can also be used for diagnostic purposes. For instance, an unexpected long Tdo could be symptom of malfunctioning of the valve. Therefore Tdo, Tdc, Tto, Ttc can be measured against the time thresholds 140 of FIG. 1 to determine a maintenance or repair condition.

While the valve control system has been described in conjunction with a specific best mode, it is to be understood that many alternatives, modifications, and variations will be apparent to those skilled in the art in light of the preceding description. Accordingly, it is intended to embrace all such alternatives, modifications, and variations, which fall within the scope of the included claims. All matters set forth herein or shown in the accompanying drawings are to be interpreted in an illustrative and non-limiting sense.

**EP 4 704 327 A1**

**Claims**

1. A valve control system comprising:
   a control logic configured to couple to a conductor and to a movable mechanism such that a back electromotive force (BEMF) peak is created within the conductor based on the movable mechanism being moved, the control logic further configured to:

   apply a control voltage to the conductor;
   detect the BEMF peak;
   determine a peak timing for the BEMF peak, and
   adjust a control voltage timing for the control voltage based on the peak timing.

2. The system of claim 1 wherein: the control logic is configured to detect the BEMF peak as a current peak.

3. The system of any preceding claim wherein: the control logic is configured to detect the BEMF peak as a voltage peak.

4. The system of any preceding claim wherein: the control logic is configured to adjust the control voltage timing for a control voltage ON time, a control voltage OFF time, or both the control voltage ON time and the control voltage OFF time.

5. The system of any preceding claim wherein: the control logic is configured to determine whether a service action is required based on the BEMF peak.

6. The system of any preceding claim wherein: the control logic is configured to adjust the control voltage timing according to Equation 7.

7. The system of any preceding claim wherein: the control logic is configured to detect the BEMF peak as a beginning of movement or an end to movement of the movable mechanism.

8. A non-transitory computer readable medium in useful association with a processor having instructions configured to:

   apply a control voltage to a conductor;
   detect a back electromotive force (BEMF) peak created within the conductor based on a movable mechanism being moved;
   determine a peak timing for the BEMF peak, and
   adjust a control voltage timing for the control voltage based on the peak timing.

9. The non-transitory computer readable medium of claim 8 wherein the instructions are configured to: detect the BEMF peak as a current peak.

10. The non-transitory computer readable medium of claim 8 or claim 9 wherein the instructions are configured to: detect the BEMF peak as a voltage peak.

11. The non-transitory computer readable medium of any of claims 8 to 10 wherein the instructions are configured to: adjust a control voltage ON time, a control voltage OFF time, or both the control voltage ON time and the control voltage OFF time.

12. The non-transitory computer readable medium of any of claims 8 to 11 wherein at least one of the following applies:

    (a) the instructions are configured to: determine whether a service action is required based on the BEMF peak;
    (b) the instructions are configured to: adjust the control voltage timing according to Equation 7;
    (c) the instructions are configured to: detect the BEMF peak as a beginning of movement or an end to movement of the movable mechanism.

13. A method of operating a valve control system comprising:

    applying a control voltage to a conductor;
    detecting a back electromotive force (BEMF) peak created within the conductor based on a movable mechanism

15

being moved;
determining a peak timing for the BEMF peak, and
adjusting a control voltage timing for the control voltage based on the peak timing.

14. The method of claim 13 wherein at least one of the following applies:

(a) detecting the BEMF peak includes detecting the BEMF peak as a current peak;
(b) detecting the BEMF peak includes detecting the BEMF peak as a voltage peak;
(c) adjusting the control voltage timing includes adjusting a control voltage ON time, a control voltage OFF time, or both the control voltage ON time and the control voltage OFF time;
(d) adjusting the control voltage timing includes adjusting the control voltage timing according to Equation 7

15. The method of any of claim 13 or claim 14 further comprising: determining whether a service action is required based on the BEMF peak.

FIG. 1

FIG. 2

300

SOL. INACT. 302

3A1 → S1, TON 304

Tso MEAS.

P1 WAIT 306

308 — IS > IP1 —T→ IP1 = IS 310

F

312 — F— IS < IP1-T —T

IP2 = IS 314 → P2 WAIT 316

318 — IS < IP2 —T

F

320 — F— IS > IP2

T

S2 WAIT 322 ← IP3 = IS 326

324 — S2? —F

T

3B1

FIG. 3A

FIG. 3B

FIG. 4

SOL. INACT. 502

5A1 → V ON 504

Tso MEAS.

P1 WAIT 506

508 — IS>IP1 —T→ IP1 = IS 510

F

512 — IS<IP1-T

F     T

P2 WAIT 516 ← IP2 = IS 514

518 — IS<IP2 —T→

F

520 — IS>IP2

F

T

S2 WAIT 522 ← IP3 = IS 526

524 — S2? —F→

T → 5B1

FIG. 5A

Tsc MEAS.

5B1 → P3 WAIT 528 ← F — IS~0 — T → TRI 548

IS~0 534

P3 WAIT 528 → IS<IP3 530

IS<IP3 — T → IP3=IS 532

IS<IP3 — F

IS>IP3+T 536 — F

IS>IP3+T — T

TRI 548 → P3 V WAIT 550

P3 V WAIT 550 → VS<VT 552

VS<VT — T → Tdc=Tn-TS2 554

VS<VT — F

IP4=IS 538 → P4 WAIT 540

P4 WAIT 540 → IS>IP4 542

IS>IP4 — T

IS>IP4 — F

IS<IP4 544 — T → PARAM. 562

IS<IP4 — F

VP4=VS 556 → P4 V WAIT 558

P4 V WAIT 558 → VS>VP4 560

VS>VP4 — T

VS>VP4 — F → PARAM. 562

PARAM. 562 → CAL ERR 564

CAL ERR 564 → CAL TON 566

CAL TON 566 → WAIT N. S1 568

WAIT N. S1 568 → 5A1

FIG. 5B

Europäisches
Patentamt

European
Patent Office

Office européen
des brevets

# EUROPEAN SEARCH REPORT

**Application Number**

**EP 25 19 5506**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/201033 A1 (AGAHI DARYUSH [US] ET AL) 29 June 2023 (2023-06-29) | 1-5,7-15 | INV. H02P7/02 |
| A | * the whole document * | 6 | H02P25/034 F16K37/00 |
| X | US 8 681 468 B2 (JACOB STEVEN D [US]; NAJJAR FARES [US] ET AL.) 25 March 2014 (2014-03-25) | 1-5,7-15 | H01F7/06 |
| A | * the whole document * | 6 | |
| X | US 8 254 077 B2 (FUKANO YOSHIHIRO [JP]; OIDE SHIGEHARU [JP] ET AL.) 28 August 2012 (2012-08-28) | 1-5,7-15 | |
| A | * the whole document * | 6 | |
| X | US 2020/135373 A1 (MUHAMMED SHIHAB T A [IN] ET AL) 30 April 2020 (2020-04-30) | 1-5,7-15 | |
| A | * the whole document * | 6 | |

TECHNICAL FIELDS
SEARCHED (IPC)

H02P

The present search report has been drawn up for all claims

| Place of search | Date of completion of the search | Examiner |
|---|---|---|
| Munich | 15 January 2026 | Koteich, Mohamad |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 5506

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | Publication date | Patent family member(s) | | Publication date |
|---|---|---|---|---|---|
| US 2023201033 | A1 | 29-06-2023 | AU | 2019398860 A1 | 27-05-2021 |
| | | | CA | 3117863 A1 | 18-06-2020 |
| | | | CN | 113194894 A | 30-07-2021 |
| | | | EP | 3860533 A1 | 11-08-2021 |
| | | | ES | 2981395 T3 | 08-10-2024 |
| | | | JP | 7429232 B2 | 07-02-2024 |
| | | | JP | 2022510640 A | 27-01-2022 |
| | | | US | 2020179169 A1 | 11-06-2020 |
| | | | US | 2023201033 A1 | 29-06-2023 |
| | | | WO | 2020121086 A1 | 18-06-2020 |
| US 8681468 | B2 | 25-03-2014 | US | 2011094589 A1 | 28-04-2011 |
| | | | WO | 2011053392 A1 | 05-05-2011 |
| US 8254077 | B2 | 28-08-2012 | CN | 102192359 A | 21-09-2011 |
| | | | DE | 102010046977 A1 | 08-09-2011 |
| | | | JP | 5019303 B2 | 05-09-2012 |
| | | | JP | 2011179647 A | 15-09-2011 |
| | | | KR | 20110100124 A | 09-09-2011 |
| | | | TW | 201131093 A | 16-09-2011 |
| | | | US | 2011214741 A1 | 08-09-2011 |
| US 2020135373 | A1 | 30-04-2020 | BR | 102019021292 A2 | 26-05-2020 |
| | | | CA | 3060038 A1 | 30-04-2020 |
| | | | EP | 3648350 A1 | 06-05-2020 |
| | | | US | 2020135373 A1 | 30-04-2020 |

# EP 4 704 327 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 82360224